# EUROPEAN PATENT APPLICATION

(11) **EP 2 541 968 A1**
(43) Date of publication of application: **02.01.2013**
(21) Application number: 11290291.1
(22) Date of filing: 29.06.2011
(51) Int. Cl.: H04Q 9/00

(54) **Data collection device**

(71) Applicant: Alcatel Lucent, 75007 Paris (FR)
(72) Inventor: Schaich, Frank, 70469 Stuttgart (DE); Halbauer, Hardy, 76275 Ettlingen (DE)
(74) Representative: Dreiss

(57) **Abstract**

The present invention relates to a data collection device (100) for collecting data from at least one sensor device (10a, 10b, .., 10n), wherein said data collection device (100) comprises a short-range communication unit (110) and is configured to establish a communications connection with a further device (300) via said communication unit (110) for forwarding data collected from said at least one sensor device (10a, 10b, .., 10n) to an evaluation device (400).

## Description

### Field of the invention

The present invention relates to a data collection device and a method of operating a data collection device.

### Background

Data collection devices are e.g. used within sensor networks, to collect sensor data from a plurality of sensor devices. For instance, sensor devices may be provided which determine weather data or traffic information or the like and which supply said data collection device with sensor data so obtained, whereby said sensor data is aggregated within said data collection device. However, aggregated sensor data is usually evaluated in some kind of central office which is remote to the sensor network and its data collection device, which raises the problem of how to transfer the locally aggregated sensor data from the data collection device to the remote central office for evaluation.

Thus, it is an object of the present invention to provide an improved data collection device which is capable of efficiently forwarding locally aggregated sensor data to a remote device for evaluation.

### Summary

According to the present invention, this object is achieved by said data collection device comprising a short-range communication unit and by being configured to establish a communications connection with a further device via said communication unit for forwarding data collected from said at least one sensor device to an evaluation device.

Thus, the presence of a further device may advantageously be utilized to forward locally aggregated sensor data to a remote evaluation device. Advantageously, a wide variety of further devices may be employed to forward said data. I.e., the inventive principle is not restricted to communicating with stationary collocated further devices for the data collection device being able to forward collected data to the remote evaluation device. In contrast, even such further devices, which are only temporarily within the communication range of the data collection device may be used. As a consequence, the data collection device according to the embodiments does not require a dedicated data transmission link to the evaluation device. It may rather make use of any further device capable of data exchange with the data collection device which is passing by close enough to enable a temporary data connection.

According to a preferred embodiment, said data collection device is configured to establish short-range communications with an arbitrary further device also capable of said short-range communications thus maximizing the number of possible data communications events.

According to a further preferred embodiment, said data collection device is configured to establish a wireless ad-hoc network with said further device which enables a particularly efficient way for the forwarding of sensor data. By employing wireless ad-hoc network-type connections, passing further devices are not even required to remain stationary close to the data collection device for a long time because the radio range of the short-range communication unit - at least to some degree - allows for data transmission even in case of nonvanishing relative speeds between the usually stationary data collection device and a passing further device. Generally, sensor data does not imply high data volumes, whereby numerous sensor data values may successfully forwarded from the data collection device in a comparative short time frame defined by a further device passing the data collection device.

According to a further preferred embodiment, said data collection device is configured to, preferably periodically, transmit signaling information for initiating said communications connection with said further device.

For examples, once the data collection device has gathered enough data and has decided to forward the information to the point where it is to be evaluated (e.g., remote evaluation device), it sends out regularly a low-energy signal ("ping") on a predefined channel or other radio resource usable by said short range communications unit. Once a bypassing further device, which may e.g. be integrated in a car or another vehicle, detects the ping signal, it starts a connection setup between itself and the data collection device. This connection setup can be designed rather simple (e.g., no multiple access scenarios have to be taken into account) and optimized for low energy consumption (as the distance between the car and the data collection device is comparatively small). Once the connection is established, the data transfer is initiated. Once the data transmission is finished, according to an embodiment, a handshake between the car or its integrated further device and the data collection device can be initiated to acknowledge the success of the transfer.

According to a further preferred embodiment, said data collection device is configured to transmit collected data to said further device without performing a handshake with said further device, preferably at an end of the data transmission, which saves energy and makes available further transmission resources for the transmission of sensor data which would otherwise be used by the handshake. To increase reliability, generally, the data collection device may transfer the same data to several further devices such as e.g. bypassing cars.

Advantageously, cars equipped with suitable communication devices at least for short-range communications with the data collection device and capable of forwarding the data transmit regularly a ping, whereby the data collection device according to the embodiments can recognize a possible data forwarding opportunity without being required to send ping signals itself. Once the data collection device receives such a ping from an approaching or passing further device, connection is established and the data transfer initiated.

Of course, instead of cars, bypassing trains or boats or suitable short-range communications devices integrated therein, respectively, may be accessed by the data collection device.

A further possibility is to employ mobile communications devices of bypassing persons as further device for forwarding collected sensor data, as long as these mobile devices are compatible with the short range communications enabled by the data collecting device's own short-range communications unit.

According to a further embodiment, the data collection device's short-range communications capabilities comprise communications according to at least one of the following standards and techniques: Bluetooth, ZigBee, near-field communication.

According to a further embodiment, the data collection device is configured to transmit control information to said further device, said control information indicating said evaluation device, so that the further device is enabled to forward received sensor data to the proper evaluation device.

A further solution to the object of the present invention is given by a sensor network comprising at least one data collection device according to the embodiments.

Yet another solution to the object of the present invention is given by a vehicle, particularly land vehicle, especially car or train, which comprises a communications device configured to receive data from a data collection device, particularly according to the embodiments, and which comprises a further communications device which is configured to forward data received via said communications device to a remote evaluation device.

Advantageously, according to a further embodiment, said communications device of the vehicle is configured to establish short-range communication, especially a wireless ad-hoc network, with said data collection device, and said further communications device of the vehicle is configured to forward said received data via a cellular communications network, e.g. a UMTS or LTE network. Of course, the functionality of the short-range communications device and the further, i.e. cellular communications device, of the vehicle may be combined in a single apparatus which may be attached fixedly to the vehicle or which may be designed mobile itself.

Another solution to the object of the present invention is given by a method of operating a data collection device for collecting data from at least one sensor device, wherein said data collection device establishes a communications connection with a further device via a short-range communication unit and forwards data collected from said at least one sensor device to an evaluation device via said further device.

Further advantageous embodiments are given by the dependent claims.

### Brief Description of the Figures

Further features, aspects and advantages of the present invention are given in the following detailed description with reference to the drawings in which:
- Figure 1: depicts a communication scenario involving a.data collection device according to the embodiments,
- Figure 2: depicts a simplified block diagram of a data collection device according to an embodiment, and
- Figure 3: depicts a simplified flow chart of a method according to the embodiments.

### Description of the embodiments

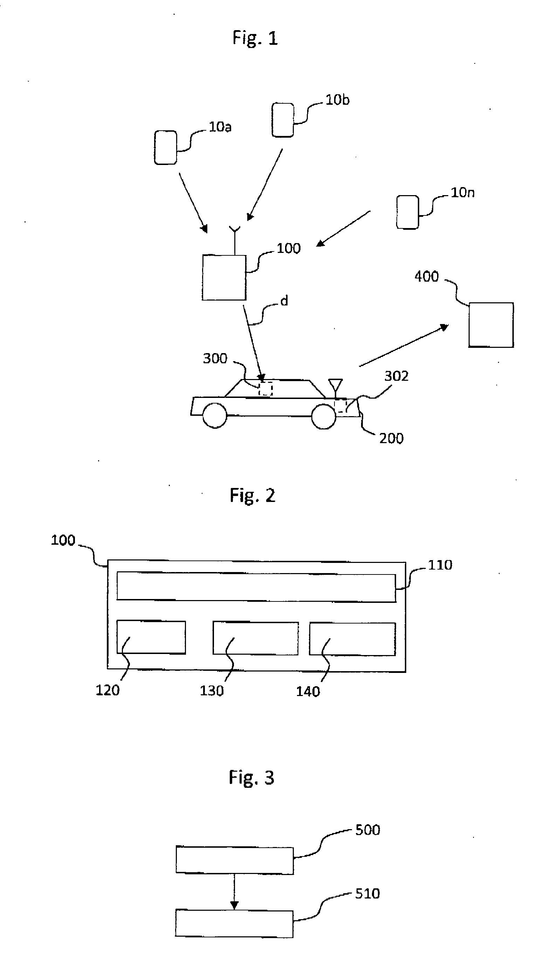

Figure 1 schematically depicts a sensor network which comprises a plurality of sensor devices 10a, 10b, .., 10n which are configured to obtain sensor data such as physical parameters (temperature, pressure, and the like) and/or weather or traffic data. The sensor data obtained by said sensor devices 10a, 10b, .., 10n is forwarded via wired and/or wireless data connections from the sensor devices 10a, 10b, .., 10n to a data collection device 100 which collects the received sensor data. By doing so, the sensor data is aggregated locally within the sensor network, i.e. at the data collection device 100.

Usually, for further evaluation, the sensor data has to be forwarded to an evaluation device 400 which is arranged remotely with respect to the sensor network and its components 10a, .., 10n, 100.

For this purpose, according to an embodiment, the data collection device 100 is equipped with a short-range communication unit 110 (Fig. 2) and is configured to establish a communications connection d with a further device 300 via said communication unit 110 for forwarding the collected sensor data to said evaluation device 400.

Thus, the presence of the further device 300 may advantageously be utilized to forward locally aggregated sensor data to the remote evaluation device 400.

Advantageously, a wide variety of further devices 300 may be employed to forward said data. I.e., the inventive principle is not restricted to communicating with stationary collocated further devices for the data collection device 100 being able to forward collected data to the remote evaluation device 400. In contrast, even such further devices 300, which are only temporarily within the communication range of the data collection device 100 may be used. As a consequence, the data collection device 100 according to the embodiments does not require an own, dedicated data transmission link to the evaluation device 400. It may rather make use of any further device 300 capable of data exchange with the data collection device 100 which is passing by close enough to enable a temporary data connection d, and which is further capable to forward received sensor data to the evaluation device 400.

For instance, in accordance with the present embodiment illustrated by Figure 1, the further device 300 is an onboard device of a car 200 which is passing by the sensor network or the data collection device 100, respectively. The further device 300 is configured to receive the aggregated sensor data from the data collection device 100 via the short-range radio link d. After reception of the data, the further device 300 forwards the received sensor data to a further onboard radio device 302 of said car 200. The further onboard device 302 e.g. may comprise an LTE modem capable of transmitting data via a cellular network according to the LTE (long term evolution) - standard. Thus, the LTE device 302 may forward sensor data received from said device 300 via a cellular communications network to the remote evaluation device 400. In effect, the communications devices 300, 302 implement the functionality of a relay station, which forwards aggregated sensor data received via a first, i.e. short-range radio, connection d to the evaluation device 400 using a further radio connection such as the LTE data connection.

According to an embodiment, the functionality of the short-range communications device 300 and the further, i.e. cellular communications device 302, of the vehicle 200 may be combined in a single apparatus which may be attached fixedly to the vehicle 200 or which may be designed mobile itself.

According to a preferred embodiment, said data collection device 100 is configured to establish short-range communications d (Figure 1) with an arbitrary further device 300 also capable of said short-range communications thus maximizing the number of possible data communications events. I.e. arbitrary cars 200 or other land or sea vehicles may be used for forwarding aggregated sensor data by the data collection device 100, as long as those arbitrary vehicles comprise the above explained "relay functionality" which enables them to forward received sensor data to remote the evaluation device 400.

According to a further preferred embodiment, said data collection device 100 is configured to establish a wireless ad-hoc network with said further device 300 which enables a particularly efficient way for the forwarding of sensor data. By employing wireless ad-hoc network-type connections, passing further devices 200 are not even required to remain stationary close to the data collection device 100 for a long time because the radio range of the short-range communication unit - at least to some degree - allows for data transmission even in case of nonvanishing relative speeds between the usually stationary data collection device 100 and a passing further device 200.

Generally, sensor data does not imply high data volumes, whereby numerous sensor data values may successfully forwarded from the data collection device 100 in a comparative short time frame defined by a further device 200 passing the data collection device.

Figure 2 schematically depicts a block diagram of the data collection device 100 according to an embodiment. The data collection device 100 comprises a short-range communication unit 110 which is configured to establish the data connection d (Figure 1) with one or more, preferably arbitrary, further devices 200 used as "relay stations".

Although said short-range communication unit 110 may also be used to implement data communications with the sensor devices 10a, .., 10n, according to a preferred embodiment, the data collection device 100 comprises a further communications interface 120 which is dedicated to data communications with the sensor devices 10a, .., 10n, whereas the short-range communication unit 110 establishes said data connections d with passing further devices 300.

The data collection device 100 may also comprise memory means 130 for at least temporarily storing aggregated sensor data from the sensor devices 10a, .., 10n.

Preferably, the data collection device 100 also comprises a control unit 140 such as a microcontroller or digital signal processor (DSP) which is configured to control a general operation of the data collection device 100 as well as an operation related to the method according to the embodiments.

According to a further preferred embodiment, said data collection device 100 is configured to, preferably periodically, transmit signaling information for initiating said communications connection d with said further device 300. For example, once the data collection device 100 has gathered enough data and has decided to forward the information to the point where it is to be evaluated (e.g., remote evaluation device 400), it sends out regularly a low-energy signal ("ping") on a predefined channel or other radio resource usable by said short range communications unit 110 (Figure 2). Once a bypassing further device 300, which may e.g. be integrated in the car 200 or another vehicle, detects the ping signal, it starts a connection setup between itself and the data collection device 100. This connection setup can be designed rather simple (e.g., no multiple access scenarios have to be taken into account) and optimized for low energy consumption (as the distance between the car 200 and the data collection device 100 is comparatively small). Once the connection d is established, the data transfer is initiated. Once the data transmission is finished, according to an embodiment, a handshake between the car 200 or its integrated further device 300 and the data collection device 100 can be initiated to acknowledge the success of the transfer.

According to a further preferred embodiment, said data collection device 100 is configured to transmit collected data to said further device 300 without performing a handshake with said further device 300, preferably at an end of the data transmission, which saves energy and makes available further transmission resources for the transmission of sensor data which would otherwise be used by the handshake.

To increase reliability, generally, the data collection device 100 may transfer the same data to several further devices 300 such as e.g. of bypassing cars 200.

According to yet another embodiment, it is also possible that the data collection device 100 continuously transmits aggregated sensor data together with destination information characterizing the target evaluation device 400, whereby a kind of broadcasting mode is effected. This mode of operation does not necessarily require any formal communications initiation or handshake procedure. A bypassing car or its device 300, respectively, may rather collect all sensor data it can pick up via the data connection d and forward it to the evaluation device 400 after having evaluated the related target information included in the broadcast sensor data.

Advantageously, according to a further embodiment, cars 200 equipped with suitable communication devices 300 at least for short-range communications with the data collection device 100 and capable of forwarding the data (i.e., by means of an LTE modem 302) transmit regularly a ping, whereby the data collection device 100 according to the embodiments can recognize a possible data forwarding opportunity without being required to send ping signals itself. Once the data collection device 100 receives such a ping from an approaching or passing further device 200, 300, connection is established and the data transfer d initiated.

Of course, instead of cars, bypassing trains or boats or even airplanes, or suitable short-range communications devices integrated therein, respectively, may be accessed by the data collection device 100.

A further possibility is to employ mobile communications devices of bypassing persons as further device for forwarding collected sensor data, as long as these mobile devices are compatible with the short range communications enabled by the data collecting device's own short-range communications unit 110.

According to a further embodiment, the data collection device's short-range communications capabilities comprise communications according to at least one of the following standards and techniques: Bluetooth, ZigBee, near-field communication.

According to a further embodiment, the data collection device 100 is configured to transmit control information to said further device 300, said control information indicating said evaluation device 400, so that the further device 300 is enabled to forward received sensor data to the proper evaluation device 400.

Figure 3 depicts a simplified flow chart of a method according to the embodiments. In a first step 500, the data collection device 100 detects a compatible short-range communications device 300 of a passing car 200. In step 510, the data collecting device 100 transmits collected sensor data via a short-range communications link d to the device 300. After that, the device 300 or a further device 302, which is in data communication with the device 300, forwards the sensor data to a remote evaluation device 400 via another type of data communications link, e.g. an LTE network.

Especially in regions with poor cellular network radio coverage, the inventive principle may advantageously be applied for implementing a data connection between sensor networks and remote evaluation devices 400. Compatible relay devices implementing the above explained functionality of the devices 300, 302 may e.g. be integrated into public transport vehicles or other land, sea or air vehicles which periodically pass specific locations in which sensor networks are to be deployed to ensure a reliable relay operation. Personal private communications devices, of course, may also be configured to implement the functionality of the devices 300, 302 thus further supporting an efficient deployment of sensor networks.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Data collection device (100) for collecting data from at least one sensor device (10a, 10b, .., 10n), wherein said data collection device (100) comprises a short-range communication unit (110) and is configured to establish a communications connection with a further device (300) via said communication unit (110) for forwarding data collected from said at least one sensor device (10a, 10b, .., 10n) to an evaluation device (400).

2. Data collection device (100) according to claim 1, wherein said data collection device (100) is configured to establish short-range communications with an arbitrary further device (300) also capable of said short-range communications.

3. Data collection device (100) according to one of the preceding claims, wherein said data collection device (100) is configured to establish a wireless ad-hoc network with said further device (300).

4. Data collection device (100) according to one of the preceding claims, wherein said data collection device (100) is configured to, preferably periodically, transmit signaling information for initiating said communications connection with said further device (300).

5. Data collection device (100) according to one of the preceding claims, wherein said data collection device (100) is configured to transmit collected data to said further device (300) without performing a handshake with said further device (300), preferably at an end of the data transmission.

6. Data collection device (100) according to one of the preceding claims, wherein said data collection device (100) is configured to transmit control information to said further device (300), said control information indicating said evaluation device (400).

7. Sensor network comprising at least one data collection device (100) according to one of the preceding claims.

8. vehicle (200), particularly land vehicle, especially car or train, which comprises a communications device (300) configured to receive data from a data collection device (100), particularly according to one of the claims 1 to 6, and which comprises a further communications device (302) which is configured to forward data received via said communications device (300) to a remote evaluation device (400).

9. Vehicle (200) according to claim 8, wherein said communications device (300) is configured to establish short-range communications, especially a wireless ad-hoc network, with said data collection device, and wherein said further communications device (302) is configured to forward said received data via a cellular communications network.

10. Method of operating a data collection device (100) for collecting data from at least one sensor device (10a, 10b, .., 10n), wherein said data collection device (100) establishes a communications connection with a further device (300) via a short-range communication unit (110) and forwards data collected from said at least one sensor device (10a, 10b, .., 10n) to an evaluation device (400) via said further device (300).

11. Method according to claim 10, wherein said data collection device (100) establishes at least one wireless ad-hoc network with one or more arbitrary further devices (300) for forwarding collected data.

12. Method according to one of the claims 10 to 11, wherein said data collection device (100) transmits collected data to said further device (300) without performing a handshake with said further device (300), preferably at an end of the data transmission.
